# EUROPEAN PATENT SPECIFICATION

(11) **EP 3 455 651 B1**
(45) Date of publication and mention of the grant of the patent: **16.06.2021**
(21) Application number: 17727120.2
(22) Date of filing: 15.05.2017
(51) Int. Cl.: G01V 3/10

(54) **METHOD AND DEVICE FOR DETECTING ELECTRICALLY CONDUCTIVE OBJECTS UNDER A GROUND SURFACE**
VERFAHREN UND VORRICHTUNG ZUR DETEKTION ELEKTRISCH LEITFÄHIGER OBJEKTE UNTER EINER BODENOBERFLÄCHE
PROCÉDÉ ET DISPOSITIF DE DÉTECTION D'OBJETS CONDUCTEURS SOUS LA SURFACE DU SOL

(30) Priority: 13.05.2016 DE 102016108988
(43) Date of publication of application: 20.03.2019
(73) Proprietor: Heinrich Hirdes GmbH, 21079 Hamburg (DE)
(72) Inventor: KÖLBEL, Jan, 21079 Hamburg (DE)
(74) Representative: Schmidt, Axel
(86) International application number: PCT/EP2017/061629
(87) International publication number: WO 2017/194788

(56) References cited:
- WO-A1-02/067015
- WO-A1-2012/129654
- WO-A1-2014/159126
- US-A1- 2002 030 492
- US-A1- 2003 034 778
- Anonymous: "Test report: demonstration of BLU-26 detection systems for UXO Lao", Geneva International Centre for Humanitarian Demining , July 2015 (2015-07), pages 1-84, XP002772795, Retrieved from the Internet: URL:https://www.gichd.org/fileadmin/GICHD- resources/rec-documents/UXO_Lao_Detection_ Trial-Test_Report-Bold.pdf [retrieved on 2017-08-04]
- Anonymous: "Gap EOD Explosive Ordnance Detection", GapEOD , 2015, pages 1-2, XP002772796, Retrieved from the Internet: URL:http://www.gapgeo.com/media/18166/eod- uxo-deep-bombs_v2.pdf [retrieved on 2017-08-04]

## Description

The present invention relates to a method for detecting electrically conductive objects under a ground surface and in particular for detecting unexploded ordnance as well as a corresponding device.

Various approaches are known from the prior art for detecting electrically conductive objects that lie concealed under a ground surface. In this connection, methods and devices for detecting unexploded ordnance constitute application fields of particularly high importance. In the context of the present invention, unexploded ordnance is understood to primarily include duds and fractured bombs or so-called partially detonated explosive shells and aerial bombs; all of the above-mentioned groups can pose considerable risks to people and the environment even after many decades.

Among other things, approaches for inducing electromagnetic pulses have proven themselves useful as a means for locating metallic objects and along with them, even non-ferromagnetic objects since these approaches are superior in essential points to a purely magnetic probing. In unexploded ordnance detection of this kind, electromagnetic pulses are transmitted into the ground by means of an excitation coil in an exact area that is determined as a rule by means of geo-coordinates. A receiver coil then measures an electromagnetic pulse response, which is emitted due to eddy currents in metallic objects in reaction to an electromagnetic excitation pulse. Based on this pulse response, it is basically possible to estimate a size, position, and depth of a metallic material. A time decay behavior of the pulse response can be used among other things as an indication of a thickness of a metallic layer, among others see Technical Note TN-7, "Applications of transient electromagnetic techniques" by J.D. McNeill, Geonics Ltd. Ontario, Canada.

The non-patent literature "Test report: demonstration of BLU-26 detection system for UXO Lao" published July 2015 discloses amongst other and similar technical solutions an apparatus having one transmitter coil and a number of 3D-receivers enclosed by the transmitter coil. Said basic structure may have been chosen due to the fact, that the intensity of a magnetic field within the transmitter coil is much stronger than outside. Thus, receivers located within the transmitter coil are likely to get a stronger response in terms of a decay signal of inducted currents from beneath the ground, too.

US 2002/0030492 A1 discloses an x-y-scanner comprising a bar carrying nine receiver coils oriented along the z-axis. This bar is moved over a smaller transmitter coil by means of fixed support beams. This massive construction is not moveable over ground at all, it is rather fixed to a certain spot to be analyzed.

WO 02/067015 A1 teaches an apparatus using of a number of excitation loops of various sizes laying inside as well as outside of an array of detectors. The detectors are made as a grid of charge detectors arranged as a movable mat acting together with an inductive transmitter loop. A time range for one complete cycle of this apparatus is given at 8 s of time. Even if a slow movement of this apparatus over ground is considered this is much too long. Thus, such an apparatus is not made to be movable over ground. Further, charge detection has been found to be far less useful in the field of UXO-determination than an analysis of a decay signal of inducted currents from beneath the ground as caused by electromagnetic pulse induction.

The object of the present invention is to create a device and a method for further improving detection possibilities with the aim of achieving a more detailed characterization of an electrically conductive object with a reduced amount of effort while being moved over ground.

This object is attained according to the invention by the features of claim 1. In a known way, the magnetic field has closed field lines with an essentially elliptical shape and also has a decrease in intensity with the cube of the distance. This field causes an excitation of a metallic interference object in the ground, which excitation has components in the x-, y-, and/or z direction that depend on the distance and position relative to the transmitter coil. For this reason, a pulse response of a metallic interference object thus also generally has components in all three spatial directions, even when it is excited only in the z direction. In a 3D receiver coil, also referred to as a three-axis receiver coil cube, the three components of a pulse response can be measured independently and separately from one another by means of their decay behavior. Based on these measured components of the pulse response and their respective intensities in the three spatial directions or Cartesian axes and a respective decay behavior, it is possible to draw a conclusion as to a three-dimensional shape of the metallic object and its position in space. Three-dimensional receiver coils, which are positioned in different positions for the measurement, exhibit fundamentally different pulse responses to one and the same transmission pulse. Thus basically, in one pass with excitation by only one pulse from a transmitter coil, as many parallel measurements are performed as there are 3D receiver coils distributed over the area in the x-y plane. This saves a significant amount of the time and energy required for a new positioning of a single receiver coil and repeatedly producing a transmission pulse.

Through a plurality of such 3-dimensional evaluations based on a plurality of 3D receiver coils distributed over the area in the x-y plane for recording the respective pulse responses, a multitude of pulse responses to the respective positions within the covered area are received in a single measurement interval. Thus for each measurement interval at one location, a larger area image of a possible contamination due to ordnance and other metallic objects does not have just one mosaic piece added to it; instead, a number of mosaic pieces containing subunits of information are obtained immediately with only a single measurement with an increased resolution across the area, where the number of these mosaic pieces corresponds to the number of 3D receiver coils distributed over the area, where a plurality of 3D receiver coils are used, which are situated in the x-y plane inside and outside said excitation coil. Thus, as part of an evaluation of these subunits of information, a three-dimensional shape of the metallic object can be determined with increased reliability. In addition to information about a depth and position in space or in the ground, in this case, an indication about a cylindrical or truncated cone-shaped outer contour with certain lengths and diameter ratios is a very significant indication of the presence of a dud, while deviations from a rotational symmetry indicate the presence of a partially detonated explosive or fractured bomb or an extensive lack of symmetry indicates the presence of metal parts that can be considered non-critical. Therefore, from a pure probing for ordnance in an area, a step forward has been made to a detection coupled with a characterization of detected metallic interference objects as possible ordnance.

Further, as receivers, compact receiver units are used in the form of 3D receiver coil cubes, each of which is equipped with three coils having magnetic main axes mutually orthogonal to each other. The 3D receiver coils are situated in said x-y plane inside and outside the excitation coils.

A plurality of excitation coils are arranged offset from one another and only partially overlapping in the x-y plane. The excitation coils are used arranged in two rows, where the excitation coils in each row are arranged directly adjacent to one another; these rows are arranged so that they only partially overlap in said x-y plane. The excitation coils are activated in a staggered fashion relative to one another.

Since the 3D receiver coils are distributed essentially in the x-y plane of the excitation coils, this arrangement is moved as a mechanically compact unit. In the course of this movement, the pulse responses with an exact detection of the current location coordinates for each 3D receiver coil are stored and/or evaluated in the form of three signals. As described in greater detail below in conjunction with an exemplary embodiment of the invention, the excitations for comparatively short times by the primary field of the transmitter coil, with the pulse responses that are to be measured, permit the implementation of a quasi-stationary measurement method. In other words, during the ongoing measurements, the in an embodiment of the invention, a unit composed of the excitation coil and 3D receiver coils distributed in the x-y plane of the excitation coil is moved or shifted as a mechanical whole and in particular as a rigid arrangement at speeds of approximately 0.5 m/s and even at higher speeds.

As an attainment of the stated object, a device for detecting unexploded ordnance consequently has:
* excitation coils lying in an x-y plane provided for generating a primary electromagnetic field only in the z direction in order to transmit electromagnetic pulses into the ground over an area that is exactly determined based on geo-coordinates or location coordinates, where the excitation coils are arranged in two rows, where the excitation coils in each row are arranged directly adjacent to one another; these rows are arranged so that they only partially overlap in said x-y plane and
* a plurality of 3D receiver coils distributed essentially in the x-y plane of the excitation coils, which are embodied for simultaneous and mutually independent electrical recording of the three spatial components of each local pulse response in the form of separate signals and their respective time decay behavior,
* where the excitation coils and the 3D receiver coils, together with a device for exactly detecting the location coordinates, constitute a moving or movable unit and this unit is connected to a device for storing and/or evaluating the pulse responses. Naturally, in order to increase the efficiency, the x-y plane of the transmitter coil in this case rests on the surface of the ground as much as possible, where the x-y plane in which the 3D receiver coils are arranged essentially corresponds to the x-y plane of the transmitter coil. Because of the final dimensions of the above-mentioned components, it is practically - but hardly - possible that all of the components lie in a shared x-y plane on the surface of the ground, which is also still being moved. For this purpose, as well, reference will be made to a subsequently described representation of an exemplary embodiment of the invention with supplementary explanations.

Advantageous modifications are the subject of the respective dependent claims. Accordingly, in a preferred embodiment of the invention, the plurality of 3D receiver coils are arranged in an x-y plane inside and outside the excitation coil and/or an area encompassed by the excitation coil. This expands a region that can be used for evaluating a pulse response beyond the dimension of the respective excitation coil emitting in the z direction. By effectively enlarging an inspectable area, these additional measurement points can improve a result and thus contribute to the clarification of the three-dimensional shape of a metallic object and thus to a more reliable characterization already in the course of the evaluation of a single excitation pulse.

To improve the coverage and inspection of a particular area, a plurality of excitation coils are arranged offset from one another in the x-y plane and are preferably embodied to be activated in a staggered fashion relative to one another. Time slots are used to prevent a reciprocal influence or distortion of measurement results by spatially offset excitation pulses. In the context of an above-mentioned quasi-stationary method, one pass through a measurement cycle composed of the emission of a primary pulse and the recording of the pulse response is so short that immediately after it, covering essentially the same area, it is possible to carry out at least one other excitation by means of an excitation coil that is offset from the relevant inspection area. The 3D receiver coils arranged over an area remain quasi-offset relative to a preceding measurement in order to then record new pulse responses with a changed excitation.

The plurality of excitation coils are arranged in a partially overlapping fashion in the x-y plane. It is particularly preferable for there to be a chronologically serial activation of the plurality of excitation coils in the x-y plane, which is particularly carried out taking into account a measurement time that is required for the respective pulse responses. The system is composed of a plurality of excitation coils and a plurality of receiver coils in order to perform its measurement task in motion as a quasi-static measurement operation. As a result, a ground space below a respective area to be inspected is excited quasi-statically and also at different angles in a particular way. An interconnection of all of the excitation coils with the exception of the respective pulse responses in this case is still quick in comparison to a change in location or speed of more than approximately 0.5 m/s. Consequently, results are achieved with a sufficiently high precision of a respectively assigned geo-position.

The excitation coils and the 3D receiver coils advantageously form an electromechanical unit that is compact and lightweight despite its area coverage and mechanical rigidity. In a modification in the form of a module, such a unit is also used to adapt a device according to the invention to larger working widths through multiplication with corresponding electrical connection and mechanical stabilization. In this sense, the above-described system is modularly constructed as a unit. Thus, the device is a basic module prepared for adaptation and expansion by the addition of the same modules for forming a modular constructed unit. In particular, it is possible to build on this to implement a system, which, by means of collapsing and folding mechanisms, assumes a compact transport position when not actively in use. Advantageously, rotation axes along the y-axis are provided within said modular constructed unit to pivot at least one basic module of the modular constructed unit by folding them by 90° or even almost 180°.

Preferably, a system of the above-described type is suitable for use on land, on or under water, directly over the ground, or from the air. In addition to bombs and mines, it can also be used to detect sea mines or torpedoes. It is thus also possible to perform measurements at a definite distance, entirely without contacting the ground.

Other features and advantages of embodiments according to the invention will be explained in greater detail below in conjunction with the drawings. The following are schematically depicted in the drawings:
- Fig. 1:: shows a side view of a field distribution of an excitation coil oriented in the z direction in two positions relative to a metallic interference object under a ground surface to be inspected;
- Fig. 2:: shows an abstract top view of an arrangement of excitation coils and 3D receiver coils;
- Figs. 3a through 3d:: show a top view of an arrangement of excitation coils and 3D receiver coils according to a first embodiment, a top view of an arrangement supplemented with 3D receiver coils, a side view of the arrangement from Fig. 3b, and an isometric depiction of the arrangement according to Figs. 3b and 3c;
- Fig. 4:: shows a top view of an arrangement of excitation coils and 3D receiver coils according to a modification of the embodiment from Fig. 3b as a base module in an embodiment with an enlarged working width, and
- Fig. 5:: shows a top view of a device for carrying out a method known from the prior art with a transmitter coil installed in stationary fashion and a movable receiver coil.

The same reference numerals are always used for the same elements throughout the various figures in the drawings.

Because of the ongoing, very high risk potential and the almost unimaginable number of potentially hazardous sites, the following discussion will focus only on a search for unexploded ordnance. Alternative application areas in the field of archaeology, prospecting for natural resources, or locating cables or underground pipelines, however, should basically not be excluded from a use of methods and devices according to the invention.

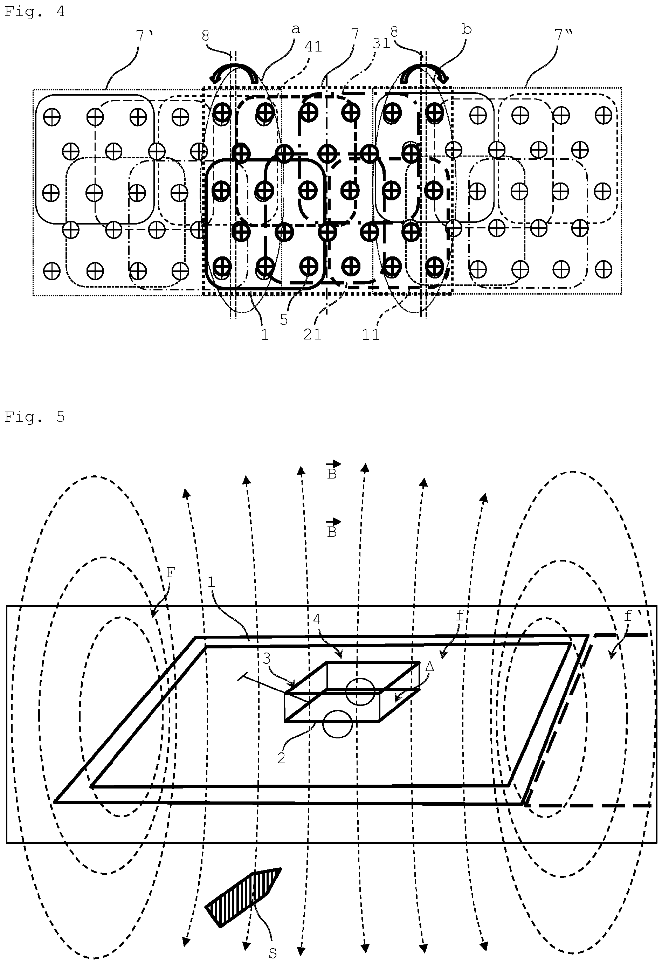

Fig. 5 shows a top view of a device for carrying out an inductive detection method known from the prior art for detecting objects composed of electrically conductive material in the form of an interference object S. The interference object S is suspected to be present in the ground under a ground surface F and must be detected or at least inspected more closely before digging in order to be able to reliably exclude a hazard. This method is superior to a known magnetic probing in that it is in principle also able to detect non-ferromagnetic objects such as magnetically invisible bombs, mines with a casing made of aluminum, or grenades and other explosive bodies with outer casings composed of brass and the like.

A large transmitter coil 1 with a coverage of an area f is installed in stationary fashion on the ground area F that is to be inspected in its entirety. The transmitter coil 1 then generates a magnetic field B having a z-oriented magnetic main axis, which is ideally arranged perpendicular to the ground surface constituting a measuring surface lying in a x-y-plane in terms of a Cartesian coordinate system. This is the basis stetting used hereafter of all drawings and embodiments, even though in practice such a perpendicular relation cannot be guaranteed. This magnetic field B is switched off as abruptly as possible in order to produce eddy currents in electrically conductive parts in the ground. The eddy currents induced in electrically conductive parts in turn emit electromagnetic fields labeled B' in the drawing of Fig. 5, which can be measured as a pulse response by means of a receiver coil 2, which has a z-oriented magnetic main axis, too.

The area f encompassed by the transmitter coil 1 represents a subarea of the ground area F that is to be inspected in its entirety. Within this subarea f, the underlying ground is then searched in that the receiver coil 2, which covers a significantly smaller area Δ, is shifted from one position to the next within the subarea f in the course of partial measurements, each with separate pulse excitations by the transmitter coil 1, until all of the positions within the subarea f delimited by the transmitter coil 1 have been covered. With a smaller distance of an electrically conductive interference body S from the receiver coil 2, a pulse response is greater than if the receiver coil 2 is positioned farther away from it. Through a precise allocation of the intensity of the respectively measured pulse responses to the respective geo-coordinates, it is thus possible to determine the positions of minimal distances from a possible interference object S or potentially hazardous spot with a conspicuously high pulse response in the course of an evaluation. Then additional inspections are conducted here.

In order to facilitate the above-described numerous positioning procedures, this receiver coil 2 is built into a rigid frame structure 3 composed of non-metallic material in the indicated way in order to stabilize it mechanically. This frame structure 3 is either carried by at least one person or is pulled by hand as a small wagon or carriage 4 in the depicted fashion. To permit the respective measurement results to be precisely allocated to a respective position, the carriage 4 is connected in a manner that is not shown in detail to a very precise global positioning system, in particular by means of a GPS link. The individual measurement results are then evaluated by recording precise geo-data with the objective of locating sites in which metallic objects or an interference object S could be concealed in the ground.

After complete coverage of the area f defined by the transmitter coil 1 has been achieved, the transmitter coil 1 is removed and set up again in an appropriately shifted position so that in a way that is depicted only schematically in the drawing, a new area f' defined by the transmitter coil 1 is established as an additional part of the overall area F to be inspected. Then this new area f' is also swept by the receiver coil 2 in a position-dictated way as described above.

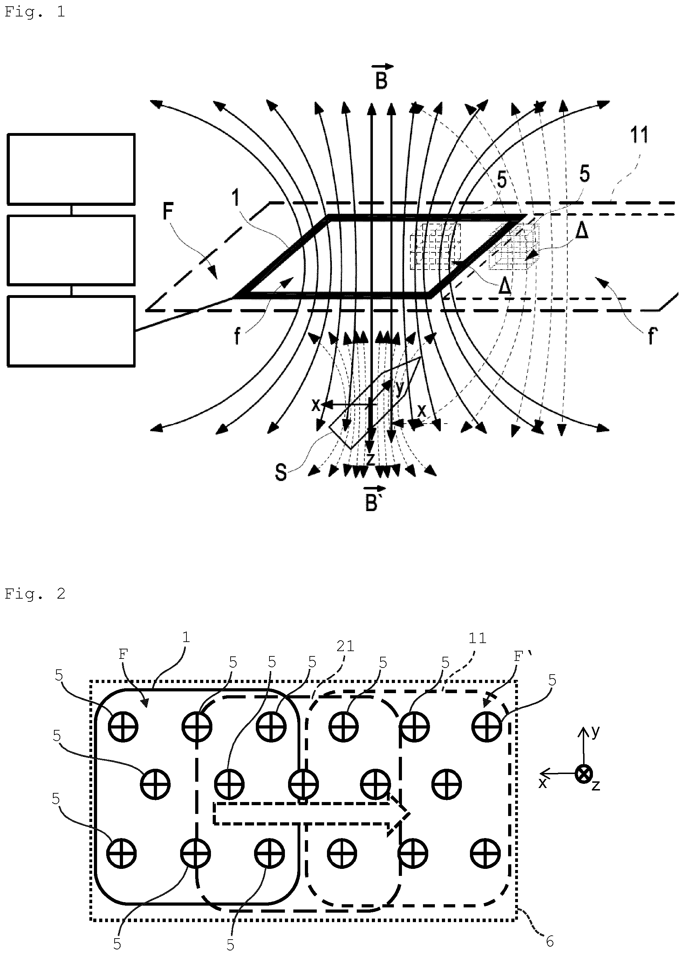

In order to reduce the amount of personal effort and time spent while simultaneously increasing the detection possibilities and improving the results, exemplary embodiments according to the present invention will now be described in greater detail. To illustrate fundamental considerations, first of all Fig. 1 shows a perspective depiction of a B-field distribution of an excitation coil 1 oriented in the z direction, which is fed by an electronically controlled generator unit or other power supply unit, not shown in detail, relative to a metallic interference object S under a ground surface F to be inspected. The subarea f located inside the transmitter coil 1 is smaller than the one in Fig. 5. Because of the shape of the elliptical magnetic field lines, the magnetic field B produced by the excitation coil 1 is oriented only in the plane of the subarea f essentially along the z axis of a Cartesian coordinate system. Outside a middle region, in addition to the z component, the magnetic field lines also clearly exhibit x and/or y components in space. Consequently, an excitation of a possible metallic interference object S occurs along all three spatial axes or components, i.e. as a rule even with an excitation by means of an electromagnetic pulse that is emitted only in the z direction. As a result, a pulse response that is required to detect a metallic interference object S will also routinely have components along all three spatial axes x, y, and z, each with an associated decay behavior. If a measurement is performed with a receiver coil 2 that is sensitive only along the z axis, then precious information is lost. On the other hand, these portions of a pulse response can be advantageously used if instead of a receiver coil 2 that is sensitive only along the z axis, a so-called three-axis receiver coil cube 5 is used as the receiver system, as is provided here in Fig. 1.

If a plurality of three-axis receiver coil cubes 5 are now distributed over the subarea f encompassed by the excitation coil 1, then because of their different positions relative to the presumed interference object S in Fig. 1, they generally measure parts of the pulse response that differ from one another in all three spatial axes. Multiplying the number of three-axis receiver coil cubes 5 by a number N within the subarea f encompassed by the excitation coil 1 therefore yields - through only one electromagnetic pulse emitted by the excitation coil 1 - N measurement values of the N three-axis receiver coil cubes 5 with signal portions in the three spatial directions x, y, and z of a Cartesian coordinate system.

Despite an attenuation of the magnetic field with the cube of the distance, a respective pulse response can nevertheless be measured by a three-axis receiver coil cube 5 even outside the transmission or excitation coil 1. Depending on the offset of the two three-axis receiver coil cubes 5 relative to each other in the plane of the area F, here, too, the two three-axis receiver coil cubes 5 will record pulse responses that differ from one another at their respective positions in response to one and the same excitation by the excitation coil 1. In other words, it is advantageous to arrange a plurality of three-axis receiver coil cubes 5 both inside and outside the excitation coil 1. Then measurement results at all locations of the three-axis receiver coil cube 5 are determined in one pass without additional position changes, a pass being characterized by the transmission of one pulse by the excitation coil 1.

If an array of three-axis receiver coil cubes 5 is formed, then it is also possible to arrange a plurality of excitation coils 11, 21, 31, ... above them. Consequently in Fig. 1, a second excitation coil 11 is depicted by way of example above a subarea f', which coil now assumes a position that is clearly offset relative to the presumed interference object S. The changed position of the excitation coil 11 relative to the interference object S yields a different field distribution and thus a different excitation of the metallic interference object S. This yields different signals of a respective pulse response. Consequently, in the event that the second excitation coil 11 emits an identical excitation pulse toward the interference object S, generally each of the three-axis receiver coil cubes 5 furnishes respective measurement values regarding components of the pulse response in all spatial axes, which values differ from those of an excitation by the excitation coil 1. Provided that the excitation coils 1 and 11 are structurally identical and always emit the same excitation pulses, it is possible to immediately carry out another measurement using the results of all of the three-axis receiver coil cubes 5, without the effort of having to shift an excitation coil 1, 11, which must then be activated, and having to produce the same arrangement of the plurality of three-axis receiver coil cubes 5.

Fig. 2 is a top view of an arrangement of excitation coils and a plurality of evenly distributed 3D receiver coils as an example not part of the invention. Specifically, an arrangement structurally assembled as a mechanical unit 7 in a mechanically rigid frame 6 that is composed of electrically nonconductive material includes three excitation coils 1, 11, and 21 with N = 17 3D receiver coil cubes 5, which are arranged essentially together in an x-y plane as measurement points just above a ground surface. With a single positioning procedure, the excitation coils 1, 11, and 21 each transmit an excitation pulse into the ground in chronological succession. Even with a statically positioned frame 6, through successive activation of the individual excitation coils 1, 11, and 21, a pulse travels along the dashed arrow in Fig. 2. In this case, for each excitation pulse, the 17 3D receiver coil cubes 5 detect 17 * 3 measurement curves. As a special feature, the excitation coils 1, 11, and 21 in Fig. 2 are arranged so that the excitation coil 11 clearly overlaps the excitation coils 1 and 21. This achieves a higher resolution through additional measurement data with a slight shift of the coil producing the excitation.

Across a tight pattern of 3D receiver coil cubes 5 as measurement points, measurement signals respectively oriented along the three spatial axes are then evaluated as to their strength and the intensity of a pulse response. The deviations that are produced across a multitude of such measurement points can therefore indicate not just the presence of an interference object S. The changes across the three spatial axes can even provide clear indications regarding a three-dimensional shape and position of an interference object S and regarding the material of which it is composed. In addition to a detection, these data therefore permit a characterization of an interference object S based on its approximate geometrical shape. Since duds have a generally cylindrical or truncated cone-shaped outer contour, they can be identified with a high degree of reliability based on a computer model and the numerous measurement values in all three spatial axes. By contrast, deviations from a rotational symmetry indicate the presence of fractured bombs or partially detonated explosives, which likewise represent a high risk potential. Here, too, recovery procedures must be carried out with extreme caution, but a depth and position in the ground are known relatively precisely with coordinates established based on the measurement results using the method according to the invention. Without sufficient rotational symmetries and with insufficient size or mass, however, one can assume that what has been detected is non-hazardous metallic accumulations, i.e. usually garbage and civilian scrap, which basically does not have to be recovered.

It takes only a short time t1 to transmit the excitation pulses into the ground. After the transmission of each excitation pulse, the pulse responses are received, even from depths of several meters in the ground, within a time t2 with sufficient consideration of a characteristic decay behavior of the pulse responses. A limit for the recording of a decay behavior of the comparatively weak pulse responses is in particular defined by the electronic noise and can be measured and adjusted for each specific application. Even with a series connection of three excitation coils 1, 11, and 21 in this case, the sum of t1+t2 amounts to only a few milliseconds, taking into account a chronological safety margin before the transmission of another excitation pulse by a subsequent excitation coil. All three excitation pulses with the associated recording of the pulse responses can thus be executed within significantly less than 1 s. Consequently, an above-described device can be shifted or moved as a mechanical unit 7, i.e. even during an ongoing measurement, at a speed v of more than approximately 0.5 m/s without causing significant errors to occur thanks to the high measurement speed. An allocation of the measurement results to the respective 3D receiver coil cubes 5 and their current geo-coordinates is thus always assured through means of the kind that have already been described as known above in conjunction with Fig. 5.

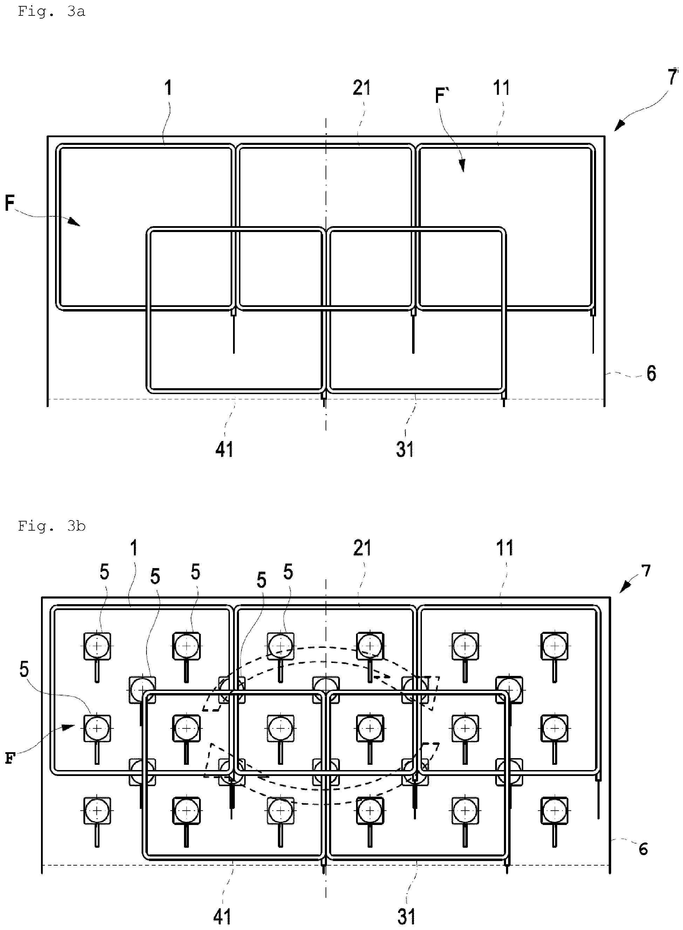

Fig. 3a shows a top view of an arrangement of five excitation coils 1, 11, 21, 31, and 41 according to another embodiment of the invention as a mechanical unit 7 that is fixed in a frame 6. By contrast with the exemplary embodiment in Fig. 2, the excitation coils 1, 11, and 21 are arranged directly adjacent to one another and are partially overlapped by the excitation coils 31 and 41. The excitation coils 31 and 41 in this case are also arranged directly adjacent to each other.

The drawing in Fig. 3b is a top view of an arrangement according to Fig. 3b that has had N=28 3D receiver coils 5 added to it. Through staggered triggering of the excitation coils 1, 11, 21, 31, and 41 in this case, in a regular measuring operation, an almost circular motion of excitation pulses is produced over almost the entire area formed by the frame 6. Without any regrouping within this mechanical unit 7, for each pulse excitation, 28 3D receiver coils 5 thus each record a total of 84 measurement curves for 3 spatial axes. These data are processed in processing and evaluation devices, not shown in detail here, along with the respective current geo-data in order to finally generate, based on the distribution of the measured pulse responses, a three-dimensional model of the electrical conductivity under the entire area to be inspected.

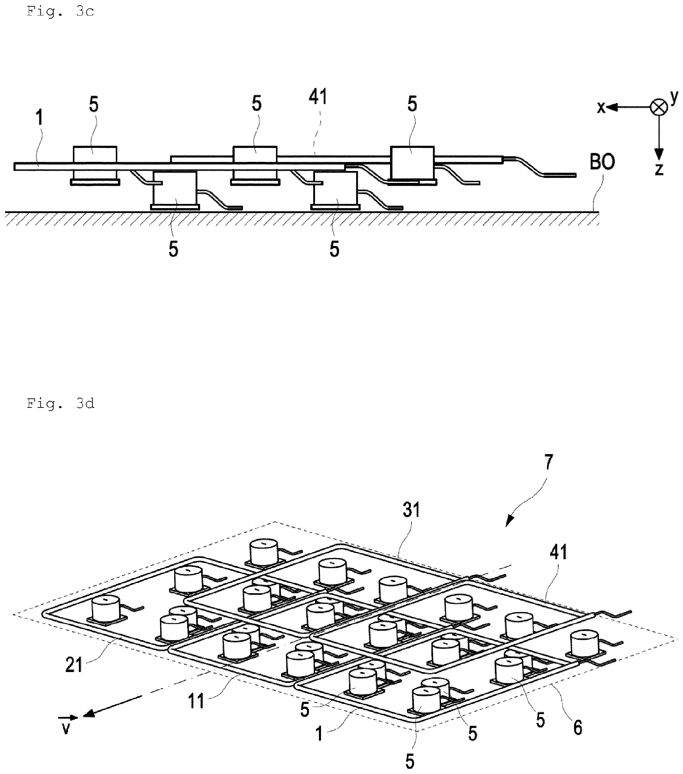

Fig. 3c is a side view of the arrangement from Fig. 3b. This view shows that in the present exemplary embodiment, in particular the overlappingly arranged excitation coils 1, 41 do not, strictly speaking, form a common plane, but instead form planes in the x-y direction that lie parallel to and spaced slightly apart from each other. The 3D receiver coils 5 arranged in rows of six units and five units in alternation with one another are also vertically offset from one another and thus form two planes in the x-y direction that lie parallel to and spaced slightly apart from each other and that do not coincide with the planes of the excitation coils 1, 11, 21, 31, and 41. These deviations, however, are minimal and can be disregarded in good approximation, as can a distance of the above-mentioned components relative to a ground surface BO, which distance in reality already fluctuates by 5 to 20 cm due to irregularities and/or vegetation. Thus, a magnetic main axis of an excitation coil 1, 11, 21, 31, and 41 is regarded to be perpendicular to said ground surface BO defining a Cartesian x-y-plane. Since the ground surface BO itself cannot constitute an ideal plane due to the simple fact that it is generally overgrown and that the mechanical unit 7 is being moved over it and, in the process, can generally experience mechanical oscillations, these deviations can all be disregarded in a good approximation.

And finally, for the same exemplary embodiment, the drawing in Fig. 3d shows an isometric depiction of the arrangement according to Figs. 3b and 3c as a mechanical unit 7 composed of excitation coils 1, 11, 21, 31, and 41 and 3D receiver coils 5, which are externally encompassed and supported by a mechanically rugged frame 6. In this case, a movement of this unit 7 is indicated, at a speed v along the central axis of the unit 7, which axis is depicted with a dot-and-dash line.

The drawing in Fig. 4 is a top view of another arrangement of excitation coils and 3D receiver coils. In this case, a modification of the embodiment according to Fig. 3b with five overlappingly arranged excitation coils 1, 11, 21, 31, and 41 forms a kind of base module. This base module has had units 7' and 7" added to it in a structurally consistent fashion by point reflection of this design at the narrow ends of the unit 7. An internal wiring and interconnection of the above-described coils is carried out in a manner not shown in detail so that essentially only one side of the structure that now includes the units 7, 7', and 7" has to be provided with power-supply and signal processing units in a proximity that rules out interference.

By means of the above-described approach, it has been possible, while maintaining the overlapping of all of the excitation coils 1, 11, 21, 31 ... selected here throughout the units 7, 7', and 7", to produce an embodiment with an almost tripled and thus significantly increased working width and a corresponding multiplication of the still regularly arranged 3D receiver coils 5. Only in the zones a and b that are enclosed in dashed lines is there now a double occupation of 3D receiver coils 5, which must be eliminated by selectively removing individual 3D receiver coils 5.

In addition, rotation axes 8 are provided extending through these zones a and b, in order to thus pivot at least parts of the added units 7' and 7" in and out by folding them by 90° or even almost 180°. This makes it possible to achieve a more compact arrangement of this device for transport, space-saving storage, or other passive positions. During operation, though, 15 excitation coils and 68 3D receiver coils, for example according to an above-described method, are triggered over an entire area or are independently triggered in the three sections of the units 7, 7' and 7" and measurement signals are carried away and processed and stored in appropriately dimensioned computers.

Embodiments of methods with corresponding devices have therefore been described above, which through the use of powerful z-oriented primary electromagnetic pulses for inducing eddy current systems in metallic bodies under the ground surface and through the measurement of a chronological curve of the decay behavior in the three spatial axes by means of so-called 3D receiver coil cubes in parallel fashion at a plurality of measurement points in the x-y plane - in addition to a purely positionally exact detection - also provide information for a characterization of a respective metallic body. Due to the high measurement speeds, in a respective position of a device for covering a larger area, a plurality of transmitter coils can each emit a respective electromagnetic pulse in a staggered fashion, with subsequent recording and evaluation of the associated pulse responses across all of the provided 3D receiver coil cubes. The method also functions so rapidly that the devices can be dynamically moved or shifted as a mechanical unit with little effort in the spirit of a quasi-stationary measurement.

### Reference numeral list

- 1: transmitter coil / excitation coil
- 2: receiver coil in the x-y plane
- 3: frame structure
- 4: wagon / carriage
- 5: 3D receiver coil / 3D receiver coil cube
- 6: electrically nonconductive frame
- 7: mechanical unit
- 7', 7": units with point-symmetrical design
- 8: rotation/folding axis
- 11, 21, 31, 41: additional transmitter coils / excitation coils
- a, b: zone in an overlapping region of units 7, 7', 7"
- B: magnetic field produced by the excitation coil 1
- B': induced field
- BO: ground surface
- S: electrically conductive material/interference object
- F: ground area to be inspected
- f: subarea encompassed by the excitation coil 1
- f': subarea encompassed by the excitation coil 11
- Δ: small area of a receiver coil 2/3D receiver coil cube 5
- N: number of 3D receiver coil cubes 5
- t1: time for transmitting an excitation pulse into the ground
- t2: time of a characteristic decay behavior of the pulse response
- v: speed of a movement/shifting of the unit 7

## Claims

1. A method for detecting electrically conductive objects under a ground surface for detecting unexploded ordnance through the use of a plurality of excitation coils (1, 11, 21, 31, and 41) for transmitting electromagnetic pulses into the ground over an area (F, f) exactly determined based on geo-coordinates or location coordinates, where a plurality of 3D receiver coils (5) are used to measure an electromagnetic pulse response, which is emitted in reaction to the electromagnetic pulses due to eddy currents in a metallic object (S), the method comprising:
generating a primary electromagnetic field, whose magnetic main axis is oriented along the z axis of a Cartesian coordinate system (x, y, z) by the plurality of excitation coils (1, 11, 21, 31, and 41) extending in an x-y plane of said Cartesian coordinate system, where the plurality of 3D receiver coils (5) are used as receivers (2), which are used distributed in the x-y plane of the excitation coils (1, 11, 21, 31, and 41) for simultaneous and mutually independent electrical recording each local pulse response at the location of each 3D receiver coil (5),
storing and/or evaluating the respective pulse responses with their decay behavior in the three spatial axes (x, y, z) with exact detection of the current location coordinates, where the plurality of excitation coils (1, 11, 21, 31, and 41) are used arranged in two rows, where the coils (1, 11, 21, 31, and 41) in each row are arranged directly adjacent to one another; these rows are arranged so that they only partially overlap in said x-y plane, and where the excitation coils (1, 11, 21, 31, and 41) are activated in a staggered fashion relative to one another,
and the excitation coils (1, 11, 21, 31, and 41) and the 3D receiver coils (5) are moved as a unit (7), and
where 3D receiver coils (5) are situated in the x-y plane inside and outside the excitation coils (1, 11, 21, 31, and 41).

2. The method according to the preceding claim, **characterized in that** as receivers, compact receiver units are used in the form of 3D receiver coil cubes (5), each of which is equipped with three coils having magnetic main axes mutually orthogonal to each other.

3. The method according to one of the preceding claims, **characterized in that** a unit composed of the excitation coils (1, 11, 21, 31, and 41) with the 3D receiver coils (5) is moved or shifted as a mechanical unit (7) during an ongoing measurement at speeds (v) of even more than approximately 0.5 m/s.

4. The method according to one of the preceding claims, **characterized in that** through staggered triggering of the excitation coils (1, 11, 21, 31, 41), in a regular measuring operation, an almost circular motion of excitation pulses is produced over almost the entire area of the unit (7) formed as a frame (6).

5. A device for detecting unexploded ordnance with a plurality of excitation coils (1, 11, 21, 31, and 41), which is positioned to transmit an electromagnetic pulse into the ground over an area (F) exactly determined based on geo-coordinates or location coordinates, and a plurality of 3D receiver coils (5) for measuring an electromagnetic pulse response, with the receiver (2) being connected to a device for storing and/or evaluating the pulse response,
the plurality of excitation coils (1, 11, 21, 31, and 41) lying in an x-y plane is provided to produce an electromagnetic primary field whose magnetic main axis is oriented along the z axis of a Cartesian coordinate system, and a plurality of 3D receiver coils (5) are embodied for simultaneous and mutually independent electrical recording the spatial components of a respective local pulse response and their respective time decay behavior,
where the excitation coils (1, 11, 21, 31, and 41) are arranged in two rows, where the excitation coils (1, 11, 21, 31, and 41) in each row are arranged directly adjacent to one another; these rows are arranged so that they only partially overlap in said x-y plane, and the plurality of excitation coils (1, 11, 21, 31, and 41) are embodied for activation in a staggered fashion relative to one another,
where the plurality of excitation coils (1, 11, 21, 31, and 41) and the plurality of 3D receiver coils (5) form a unit (7) that is configured to be moved together with a device for exactly detecting location coordinates and
3D receiver coils (5) are distributed in the x-y plane of the excitation coils (1, 11, 21, 31, and 41) and the 3D receiver coils (5) are located in the x-y plane inside and outside the plurality of excitation coils (1, 11, 21, 31, and 41).

6. The device according to the preceding claim, **characterized in that** a plurality of excitation coils (1, 11, 21, 31, and 41) and a plurality of 3D receiver coils (5) fixed in a rigid arrangement with respect to one another form the device that is compact and lightweight despite its area coverage.

7. The device according to one of the preceding claims 5 to 6, **characterized in that** the device is a basic module prepared for adaptation and expansion by the addition of the same modules for forming a modular constructed unit.

8. The device according of claim 7, **characterized in that** rotation axes (8) along the y-axis are provided to pivot at least one basic module of the modular constructed unit by folding them by 90° or even almost 180°.

## Patentansprüche

1. Verfahren zum Detektieren von elektrisch leitfähigen Objekten unter einer Bodenoberfläche zum Aufspüren von nicht explodierten Kampfmitteln durch die Verwendung einer Vielzahl von Erregerspulen (1, 11, 21, 31 und 41) zum Senden von elektromagnetischen Impulsen in den Boden über einen Bereich (F, f), der auf der Basis von Geokoordinaten oder Ortskoordinaten genau bestimmt ist, wobei eine Vielzahl von 3D-Empfängerspulen (5) verwendet wird, um eine elektromagnetische Impulsantwort zu messen, die als Reaktion auf die elektromagnetischen Impulse aufgrund von Wirbelströmen in einem metallischen Objekt (S) emittiert wird,
wobei das Verfahren folgende Schritte umfasst:
Erzeugen eines primären elektromagnetischen Feldes, dessen magnetische Hauptachse entlang der z-Achse eines kartesischen Koordinatensystems (x, y, z) orientiert ist, durch die Vielzahl von Erregerspulen (1, 11 , 21, 31 und 41), die sich in einer x-y-Ebene des kartesischen Koordinatensystems erstrecken, wobei die Vielzahl von 3D-Empfängerspulen (5) als Empfänger (2) verwendet werden, die in der x-y-Ebene der Erregerspulen (1 , 11, 21, 31 und 41) verteilt zur gleichzeitigen und voneinander unabhängigen elektrischen Aufnahme jeder lokalen Impulsantwort am Ort jeder 3D-Empfängerspule (5) verwendet werden,
Speichern und/oder Auswerten der jeweiligen Impulsantworten mit ihrem Abklingverhalten in den drei Raumachsen (x, y, z) unter exakter Erfassung der aktuellen Ortskoordinaten, wobei die Vielzahl der Erregerspulen (1, 11 ,21, 31 und 41) in zwei Reihen angeordnet verwendet werden, wobei die Spulen (1, 11 , 21, 31 und 41) in jeder Reihe direkt nebeneinander angeordnet sind, wobei diese Reihen so angeordnet sind, dass sie sich in der genannten x-y-Ebene nur teilweise überlappen, und
wobei die Erregerspulen (1, 11, 21, 31 und 41) relativ zueinander versetzt aktiviert werden,
und die Erregerspulen (1, 11, 21, 31 und 41) und die 3D-Empfängerspulen (5) als eine Einheit (7) bewegt werden, und
wobei sich die 3D-Empfängerspulen (5) in der x-y-Ebene innerhalb und außerhalb der Erregerspulen (1 ,11,21, 31 und 41) befinden.

2. Verfahren nach dem vorhergehenden Anspruch, **dadurch gekennzeichnet, dass** als Empfänger kompakte Empfängereinheiten in Form von 3D-Empfängerspulenwürfeln (5) verwendet werden, die jeweils mit drei Spulen ausgestattet sind, deren magnetische Hauptachsen zueinander orthogonal sind.

3. Verfahren nach einem der vorhergehenden Ansprüche, **dadurch gekennzeichnet, dass** eine Einheit aus den Erregerspulen (1, 11, 21, 31 und 41) mit den 3D-Empfängerspulen (5) als mechanische Einheit (7) während einer laufenden Messung mit Geschwindigkeiten (v) von noch mehr als ca. 0,5 m/s bewegt oder verschoben wird.

4. Verfahren nach einem der vorhergehenden Ansprüche, **dadurch gekennzeichnet, dass** durch eine gestaffelte Ansteuerung der Erregerspulen (1, 11,21, 31, 41) in einem regulären Messbetrieb eine nahezu kreisförmige Bewegung von Erregungsimpulsen über nahezu die gesamte Fläche erzeugte wird, die durch die als Rahmen (6) ausgeführte Einheit (7) gebildet wird.

5. Vorrichtung zum Aufspüren von Blindgängern mit einer Vielzahl von Erregerspulen (1, 11, 21, 31 und 41), die so angeordnet sind, dass sie über eine anhand von Geo- oder Ortskoordinaten genau bestimmte Fläche (F) einen elektromagnetischen Impuls in den Boden aussenden, und einer Vielzahl von 3D-Empfängerspulen (5) zum Messen einer elektromagnetischen Impulsantwort, wobei der Empfänger (2) mit einer Einrichtung zum Speichern und/oder Auswerten der Impulsantwort verbunden ist,
wobei die Mehrzahl von in einer x-y-Ebene liegenden Erregerspulen (1 , 11, 21, 31 und 41) zur Erzeugung eines elektromagnetischen Primärfeldes vorgesehen ist, dessen magnetische Hauptachse entlang der z-Achse eines kartesischen Koordinatensystems orientiert ist, und eine Mehrzahl von 3D-Empfängerspulen (5) zur gleichzeitigen und voneinander unabhängigen elektrischen Erfassung der räumlichen Komponenten einer jeweiligen lokalen Impulsantwort und ihres jeweiligen zeitlichen Abklingverhaltens ausgebildet sind,
wobei die Erregerspulen (1, 11, 21, 31 und 41) in zwei Reihen angeordnet sind, wobei die Erregerspulen (1 , 11, 21, 31 und 41) in jeder Reihe direkt nebeneinander angeordnet sind; und diese Reihen so angeordnet sind, dass sie sich in der x-y-Ebene nur teilweise überlappen, und die Mehrzahl von Erregerspulen (1, 11, 21, 31 und 41) zur Aktivierung in einer gestaffelten Weise relativ zueinander ausgebildet sind,
wobei die Mehrzahl von Erregerspulen (1 ,11,21,31, und 41) und die Mehrzahl von 3D-Empfängerspulen (5) eine Einheit (7) bilden, die dazu ausgebildet ist, zusammen mit einer Vorrichtung zur exakten Erfassung von Ortskoordinaten bewegt zu werden und 3D-Empfängerspulen (5) in der x-y-Ebene der Erregerspulen (1 , 11, 21, 31 und 41) verteilt sind und die 3D-Empfängerspulen (5) in der x-y-Ebene innerhalb und außerhalb der Mehrzahl von Erregerspulen (1 ,11,21,31 und 41) angeordnet sind.

6. Vorrichtung nach dem vorhergehenden Anspruch, **dadurch gekennzeichnet, dass** eine Vielzahl von Erregerspulen (1, 11, 21, 31 und 41) und eine Vielzahl von 3D-Empfängerspulen (5) in starrer Anordnung zueinander die Vorrichtung bilden, die trotz ihrer Flächenabdeckung kompakt und von geringem Gewicht ist.

7. Vorrichtung nach einem der vorhergehenden Ansprüche 5 bis 6, **dadurch gekennzeichnet, dass** die Vorrichtung ein Basismodul ist, das zur Anpassung und Erweiterung durch Hinzufügen von gleichen Modulen zur Bildung einer modular aufgebauten Einheit vorbereitet ist.

8. Vorrichtung nach Anspruch 7, **dadurch gekennzeichnet, dass** Drehachsen (8) entlang der y-Achse vorgesehen sind, um mindestens ein Grundmodul der modular aufgebauten Einheit durch Faltung um 90° oder sogar nahezu 180° zu schwenken.

## Revendications

1. Procédé pour détecter des objets électriquement conducteurs sous une surface du sol pour détecter des munitions non explosées par l'utilisation d'une pluralité de bobines d'excitation (1, 11, 21, 31 et 41) pour transmettre des impulsions électromagnétiques dans le sol sur une zone (F, f) déterminée exactement sur la base de coordonnées géographiques ou de coordonnées d'emplacement, où une pluralité de bobines réceptrices 3D (5) sont utilisées pour mesurer une réponse d'impulsion électromagnétique, qui est émise en réaction aux impulsions électromagnétiques dues aux courants de Foucault dans un objet métallique (S),
le procédé comprenant
la génération d'un champ électromagnétique primaire, dont l'axe magnétique principal est orienté le long de l'axe z d'un système de coordonnées cartésiennes (x, y, z) par la pluralité de bobines d'excitation (1, 11, 21, 31 et 41) s'étendant dans un plan x-y dudit système de coordonnées cartésiennes, où la pluralité de bobines réceptrices 3D (5) sont utilisées comme récepteurs (2), qui sont utilisés répartis dans le plan x-y des bobines d'excitation (1 , 11, 21, 31 et 41) pour l'enregistrement électrique simultané et mutuellement indépendant de chaque réponse d'impulsion locale à l'emplacement de chaque bobine réceptrice 3D (5),
le stockage et/ou l'évaluation des réponses impulsionnelles respectives avec leur comportement de décroissance dans les trois axes spatiaux (x, y, z) avec une détection exacte des coordonnées de l'emplacement actuel, où la pluralité de bobines d'excitation (1, 11, 21, 31 et 41) sont utilisées disposées en deux rangées, où les bobines (1, 11, 21, 31 et 41) de chaque rangée sont disposées directement adjacentes l'une à l'autre, ces rangées sont disposées de sorte qu'elles ne se chevauchent que partiellement dans ledit plan x-y, et où les bobines d'excitation (1, 11, 21, 31 et 41) sont activées de manière décalée les unes par rapport aux autres,
et les bobines d'excitation (1, 11, 21, 31 et 41) et les bobines de réception 3D (5) sont déplacées comme une unité (7), et
où les bobines de réception 3D (5) sont situées dans le plan x-y à l'intérieur et à l'extérieur des bobines d'excitation (1 ,11,21, 31 et 41).

2. Procédé selon la revendication précédente, **caractérisé en ce que**, en tant que récepteurs, des unités de réception compactes sont utilisées sous la forme de cubes de bobines de réception 3D (5), dont chacun est équipé de trois bobines ayant des axes principaux magnétiques mutuellement orthogonaux les uns aux autres.

3. Procédé selon l'une des revendications précédentes, **caractérisé en ce qu'**une unité composée des bobines d'excitation (1, 11, 21, 31 et 41) avec les bobines réceptrices 3D (5) est déplacée ou décalée en tant qu'unité mécanique (7) pendant une mesure en cours à des vitesses (v) même supérieures à environ 0,5 m/s.

4. Procédé selon l'une des revendications précédentes, **caractérisé en ce que** par un déclenchement échelonné des bobines d'excitation (1, 11, 21, 31, 41), dans une opération de mesure régulière, un mouvement presque circulaire des impulsions d'excitation est produit sur presque toute la surface de l'unité (7) formée comme un cadre (6).

5. Dispositif pour la détection de munitions non explosées avec une pluralité de bobines d'excitation (1, 11, 21, 31 et 41), qui est positionnée pour transmettre une impulsion électromagnétique dans le sol sur une zone (F) déterminée exactement sur la base de géo-coordonnées ou de coordonnées de localisation, et une pluralité de bobines de réception 3D (5) pour mesurer une réponse d'impulsion électromagnétique, le récepteur (2) étant relié à un dispositif pour stocker et/ou évaluer la réponse d'impulsion,
la pluralité de bobines d'excitation (1, 11, 21, 31 et 41) situées dans un plan x-y est prévue pour produire un champ primaire électromagnétique dont l'axe magnétique principal est orienté le long de l'axe z d'un système de coordonnées cartésiennes, et une pluralité de bobines réceptrices 3D (5) sont réalisées pour l'enregistrement électrique simultané et mutuellement indépendant des composantes spatiales d'une réponse impulsionnelle locale respective et de leur comportement respectif de décroissance dans le temps,
où les bobines d'excitation (1, 11, 21, 31 et 41) sont disposées en deux rangées, où les bobines d'excitation (1, 11, 21, 31 et 41) dans chaque rangée sont disposées directement adjacentes l'une à l'autre ; ces rangées sont disposées de sorte qu'elles ne se chevauchent que partiellement dans ledit plan x-y, et la pluralité de bobines d'excitation (1, 11, 21, 31 et 41) sont réalisées pour être activées d'une manière décalée les unes par rapport aux autres,
où la pluralité de bobines d'excitation (1, 11, 21, 31 et 41) et la pluralité de bobines réceptrices 3D (5) forment une unité (7) qui est configurée pour être déplacée avec un dispositif pour détecter exactement les coordonnées d'un emplacement, et
les bobines de réception 3D (5) sont réparties dans le plan x-y des bobines d'excitation (1 , 11, 21, 31 et 41) et les bobines de réception 3D (5) sont situées dans le plan x-y à l'intérieur et à l'extérieur de la pluralité de bobines d'excitation (1 , 11, 21, 31 et 41).

6. Dispositif selon la revendication précédente, **caractérisé en ce qu'**une pluralité de bobines d'excitation (1, 11, 21, 31 et 41) et une pluralité de bobines de réception 3D (5) fixées dans un agencement rigide les unes par rapport aux autres forment le dispositif qui est compact et léger malgré sa couverture de zone.

7. Le dispositif selon l'une des revendications précédentes 5 à 6, **caractérisé en ce que** le dispositif est un module de base préparé pour l'adaptation et l'expansion par l'addition des mêmes modules pour former une unité construite modulaire.

8. Dispositif selon la revendication 7, **caractérisé en ce que** des axes de rotation (8) selon l'axe y sont prévus pour faire pivoter au moins un module de base de l'unité construite modulaire en les pliant de 90°, voire de près de 180°.
